# FASCICULE DE BREVET EUROPEEN

(11) **EP 1 030 471 B1**
(45) Date de publication et mention de la délivrance du brevet: **03.04.2002**
(21) Numéro de dépôt: 00400174.9
(22) Date de dépôt: 24.01.2000
(51) Int. Cl.: H04B 10/17, H04B 10/16, H04J 14/02

(54) **Système de transmission optique régénéré WDM**
Regeneriertes optisches WDM Übertragungssystem
Regenerated optical WDM transmission system

(30) Priorité: 19.02.1999 FR 9902126
(43) Date de publication de la demande: 23.08.2000
(73) Titulaire: ALCATEL, 75008 Paris (FR)
(72) Inventeur: Brindel, Patrick, 91310 Longpont S/orge (FR); Dany, Bruno, 75014 Paris (FR); Desurvire, Emmanuel, 91680 Bruyeres le Chatel (FR)
(74) Mandataire: Lamoureux, Bernard

(56) Documents cités:
- EP-A- 0 579 401
- EP-A- 0 812 078
- WO-A-98/35459

## Description

La présente invention concerne les systèmes de transmission par fibre optique à multiplexage en longueurs d'onde, et plus précisément, la régénération des ces signaux.

On soit que pour la transmission de signaux optiques à très longues distances, telles que les transmissions transocéaniques par câble sous-marin, il est nécessaire d'amplifier périodiquement les signaux optiques pour compenser l'atténuation du signal, et qu'il est également nécessaire de remettre en forme les signaux pour compenser les déformations induites par le milieu ou l'interaction entre les différents signaux du multiplex. Ces déformations sont compensées par des régénérateurs qui assurent des fonctions de remise en forme des impulsions, de recadrage temporel des impulsions et de compensation des pertes d'intensité des impulsions dans le régénérateur (régénération dite "3R" pour "re-shaping", "re-timing" et "re-amplifying" en terminologie anglo-saxonne).

Les systèmes de transmission à multiplexage en longueurs d'onde (dits "WDM" pour "wavelength division multiplexed" en terminologie anglo-saxonne) comportent de plus en plus de canaux (ou longueurs d'ondes) par fibre optique. Le débit par canal croît également. Ainsi, les plus récents systèmes de transmission transocéaniques ont une capacité de 32 canaux à 10 Gbit/s chacun.

La régénération des signaux de chaque canal dans de tels systèmes peut être envisagée de différentes manières. Une solution consiste à démultiplexer les signaux et à régénérer chaque signal individuellement. Cette solution présente cependant l'inconvénient de nécessiter autant d'unités de régénération qu'il y a de signaux multiplexés ce qui, compte-tenu de la tendance à l'augmentation du nombre de canaux, conduit à un régénérateur complexe et volumineux, demandant en outre une alimentation électrique importante, paramètres qui sont fortement pénalisants pour les transmissions par câble sous-marin.

Une autre solution, utilisable dans le cas de signaux WDM solitons (ou RZ convertis en solitons en entrée du régénérateur), consiste à utiliser un régénérateur comportant un moyen de compensation de la dispersion chromatique, pour resynchroniser les différents canaux, puis un modulateur synchrone. Cette solution présente l'inconvénient de nécessiter une gestion très précise de la dispersion chromatique, de manière que les signaux soient parfaitement synchrones en entrée du modulateur synchrone. Une telle gestion de la dispersion chromatique est d'autant plus difficile à réaliser qu'elle doit s'appliquer à un nombre de canaux important.

Il a également été proposé, dans le cas de signaux solitons WDM, de disposer les régénérateurs le long de la ligne optique à des endroits où un certain nombre de canaux sont naturellement synchrones, et de régénérer uniquement ces canaux, à chacun de ces endroits (cf. WO-A-98 35459). Cette technique introduit toutefois une contrainte sur la position des régénérateurs qui, selon le nombre de canaux et leur espacement en longueur d'onde, peut parfois être génante.

L'invention propose une solution simple pour la régénération des canaux dans un système de transmission WDM, et qui reste simple même lorsque le nombre de canaux est important.

Plus précisèment, l'invention propose un système de transmission sur fibre optique à multiplexage en longueurs d'onde à n canaux, comprenant un émetteur optique et un récepteur optique reliés par une ligne optique comportant au moins une fibre optique, et au moins un ensemble de m (m>1) moyens de régénération des canaux, caractérisé en ce que p (p≤m) moyens de régénération successifs régénèrent respectivement des groupes de canaux G₁, G₂, ... Gₚ, ces groupes formant une partition de l'ensemble des n canaux.

Le nombre p de groupes est de préférence un sous-multiple du nombre total m de régénérateurs système.

Les groupes de canaux comportent de préférence un petit nombre de canaux, en particulier un seul canal ou deux canaux.

La structure du régénérateur est ainsi grandement simplifiée, par rapport aux solutions consistant à démultiplexer tous les signaux ou à compenser la dispersion chromatique de tous les signaux entre eux.

Avantageusement, chaque régénérateur comprend un moyen de régénération optique.

Dans le cas où plusieurs canaux sont régénérés dans le même régénérateur, chaque régénérateur peut comporter un moyen de synchronisation des canaux à régénérer et un moyen de régénération optique, en particulier un modulateur synchrone.

Selon un premier mode de réalisation préféré de l'invention, chaque régénérateur comprend un démultiplexeur et un multiplexeur afin de traiter de manière indépendante les canaux à régénérer d'une part, et les canaux à ne pas régénérer d'autre part.

Selon un second mode de réalisation préféré de l'invention, chaque régénérateur comprend un dispositif d'insertion/extraction afin d'isoler les canaux à régénérer.

Dans un système conforme à l'invention, un amplificateur de compensation pour compenser des différences d'intensité entre les canaux régénérés et les canaux non régénérés peut en outre être prévu.

De manière avantageuse, le système de transmission comprend un moyen de supervision mettant en oeuvre un canal dédicacé λₛ. Dans un tel système de transmission, chaque régénérateur peut comprendre un moyen pour séparer le canal λₛ des autres canaux, une unité de supervision pour modifier le signal du canal λₛ en fonction d'informations relatives à l'état du régénérateur, et un moyen pour remultiplexer le canal λₛ avec les autres canaux.

En particulier, chaque régénérateur peut inclure un moyen de régénération pour régénérer les canaux d'un groupe de canaux, l'unité de supervision recevant des informations dudit moyen de régénération et recevant une fraction du signal régénéré délivré par ledit moyen de régénération.

De préférence, le système selon l'invention comprend une pluralité d'amplificateurs optiques disposés à une distance Zₒ les uns des autres, et des régénérateurs optiques disposés à une distance Zᵣ les uns des autres, où Zᵣ est un multiple de Z_{a.}

Les caractéristiques et avantages de l'invention ressortiront mieux de la description qui va suivre, donnée à titre illustratif mais non limitatif, en référence aux dessins annexés, sur lesquels :
- la figure 1 représente la structure générale connue d'un système de transmission optique incluant des régénérateurs,
- la figure 2 illustre un mode de réalisation d'un régénérateur conforme à l'invention,
- la figure 3 illustre une variante de réalisation du régénérateur de la figure 2, adapté pour régénérer deux canaux,
- la figure 4 illustre un autre mode de réalisation d'un régénérateur conforme à l'invention, pour la régénération d'un seul canal,
- la figure 5 illustre une variante de réalisation du régénérateur de la figure 4, adapté pour régénérer deux canaux, et
- la figure 6 représente un système de transmission optique, conforme à l'invention, équipé d'un moyen de supervision optique.

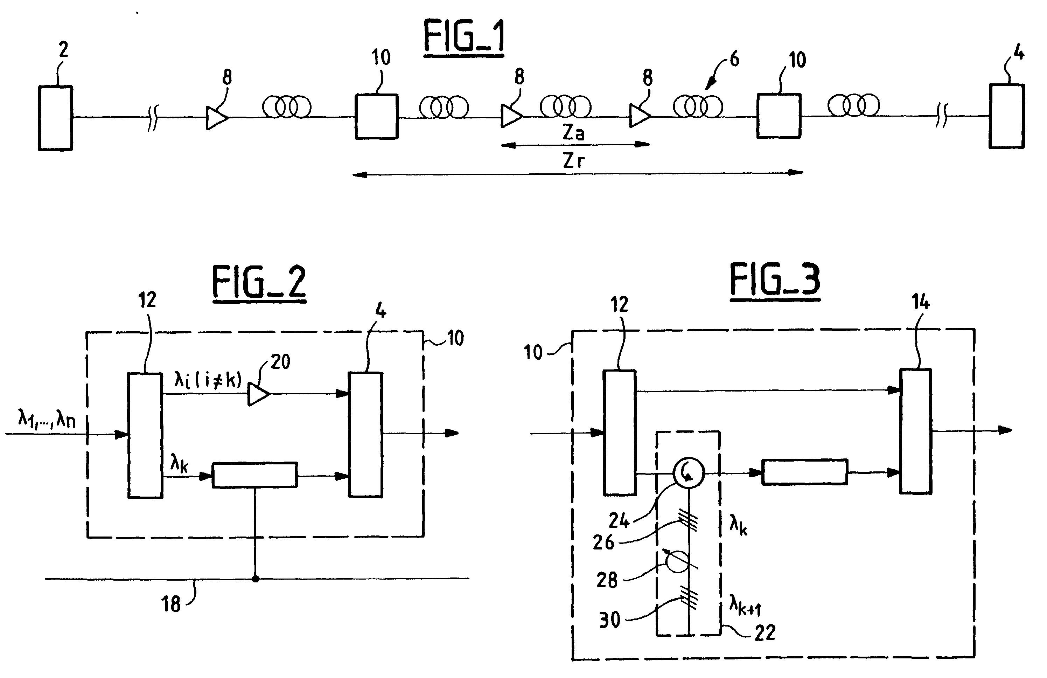

On a représenté sur la figure 1 un système de transmission optique de structure classique. Il comprend deux stations terminales, à savoir un émetteur 2 et un récepteur 4, reliés par une liaison à fibre optique 6. Des amplificateurs 8 sont disposés à intervalles réguliers sur cette fibre optique pour réamplifier les signaux et compenser ainsi les pertes dûes à l'absorption par la fibre optique. Le pas Zₐ entre deux amplificateurs successifs dépend de nombreux paramètres (intensité des signaux, absorption par la fibre optique, séparation en longueur d'onde entre les signaux, ...); il est typiquement de 50 à 100 km. Le système de transmission comprend en outre des régénérateurs optiques 10. Là encore, le pas Zᵣ entre deux régénérateurs successifs dépend de nombreux paramètres (effet Kerr, gigue de Gordon -Haus, interaction quatre-onde,..) qui affectent la forme des impulsions et induisent un décalage des impulsions par rapport à leur temps bit nominal. Les régénérateurs sont disposés en général à une distance Zₐ par rapport à un amplificateur 10 et comprennent un amplificateur semblable aux amplificateurs 8. Le pas Zᵣ entre deux régénérateurs est égal à k.Zₐ, où k est un entier en général compris entre 5 à 10, ce nombre dépendant notamment du débit des signaux du multiplex.

L'invention diffère des systèmes de transmission de l'art antérieur en ce que chaque régénérateur régénère un nombre réduit de canaux. A titre d'exemple, pour un système WDM comportant n longueurs d'ondes λ₁, λ₂, ..., λₙ (n étant par exemple égal à 32), chaque régénérateur pourra être conçu pour régénérer une seule longueur d'onde. En d'autres termes, on répartit les n canaux en n groupes G₁, G₂, ..., Gₙ comportant chacun un seul canal. On aura ainsi successivement le long de la ligne, avec des intervalles Zᵣ entre chaque régénérateur, un régénérateur R₁ pour régénérer le canal λ₁, un régénérateur R₂ pour le canal λ₂, ..., un régénérateur Rₙ pour le canal λₙ, à nouveau un régénérateur R₁ pour le canal λ₁, etc... L'avantage important est la simplification apportée au système car chaque régénérateur a une structure simple.

Au lieu d'un seul canal par groupe, on peut prévoir un système de transmission dans lequel les n canaux sont divisés en n/2 groupes, comportant chacun deux canaux, et de manière plus générale un système dans lequel les n canaux sont divisés en p groupes comportant chacun n/p canaux.

Enfin, on peut encore répartir les canaux de manière inégale entre les groupes, par exemple deux canaux dans le groupe G₁, trois canaux dans le groupe G₂, deux canaux dans le groupe G₃, ...

On verra à la description des figures suivantes que chaque régénérateur a une structure identique. Il en résulte une plus grande simplicité de conception du système et de fabrication des régénérateurs, ce qui induit une fiabilité plus importante du système de transmission.

A titre d'exemple, pour une liaison transocéanique de 32 canaux à 10 Gbit/s et ayant une longueur de l'ordre de 10 000 km, la distance Zₐ entre amplificateurs est de l'ordre de 40 km et la distance Zᵣ entre régénérateurs de l'ordre de 320 km.

La figure 2 illustre un premier mode de réalisation d'un régénérateur conçu pour régénérer un seul canal. Il comprend en entrée un duplexeur 12 pour séparer le canal à régénérer λₖ des autres canaux λᵢ (1 ≤ i ≤ n; i ≠ k), et en sortie un duplexeur 14 pour remultiplexer le canal λₖ avec les autres canaux. Le moyen de régénération 16 peut être de tout type connu, et comprendre avantageusement, dans le cas de signaux solitons ou RZ convertis en solitons, un modulateur optique synchrone.

De manière générale, bien qu'un moyen de régénération optique soit actuellement préféré, l'utilisation de moyens de régénération opto-électriques, c'est-à-dire des moyens de régénération dans lesquels les signaux optiques sont convertis en signaux électriques, puis régénérés sous forme électrique, avant d'être à nouveau convertis en signaux optiques, n'est pas exclue dans le cadre de la présente invention.

Le moyen de régénération est alimenté par un câble électrique 18 (non représenté sur la figure 1). Pour compenser la différence d'intensité entre les canaux non-régénérés et le canal λₖ, un amplificateur de compensation 20 peut être disposé sur la branche du régénérateur recevant les canaux non-régénérés. Dans certains modes de réalisation, un tel amplificateur de compensation pourrait au contraire être placé sur la branche recevant le moyen de régénération 16, dans le cas où ce dernier induit une perte d'intensité dans le canal λₖ.

Dans le cas où le régénérateur 10 est disposé à une distance Zₐ de l'amplificateur 8 qui le précède (cf. Figure 1), le régénérateur 10 de la figure 2 comporte en outre un amplificateur 8. Celui-ci est placé de préférence en sortie du régénérateur 10, mais il pourrait aussi être disposé en entrée de ce dernier. Il pourrait également remplacer l'amplificateur 20 de la figure 2, en ce qui concerne les canaux non régénérés. Dans ce cas, le moyen de régénération 16 devrait comprendre également un amplificateur pour amener les signaux à régénérer à la même intensité, en sortie du régénérateur 10, que celle des signaux non régénérés. Ce dernier agencement est particulièrement intéressant car le nombre de signaux que chaque amplificateur doit amplifier est plus faible, par rapport aux amplificateurs de ligne 8 (figure 1). On peut alors utiliser, dans les régénérateurs, des amplificateurs moins puissant ou disposer de plus de marge de puissance.

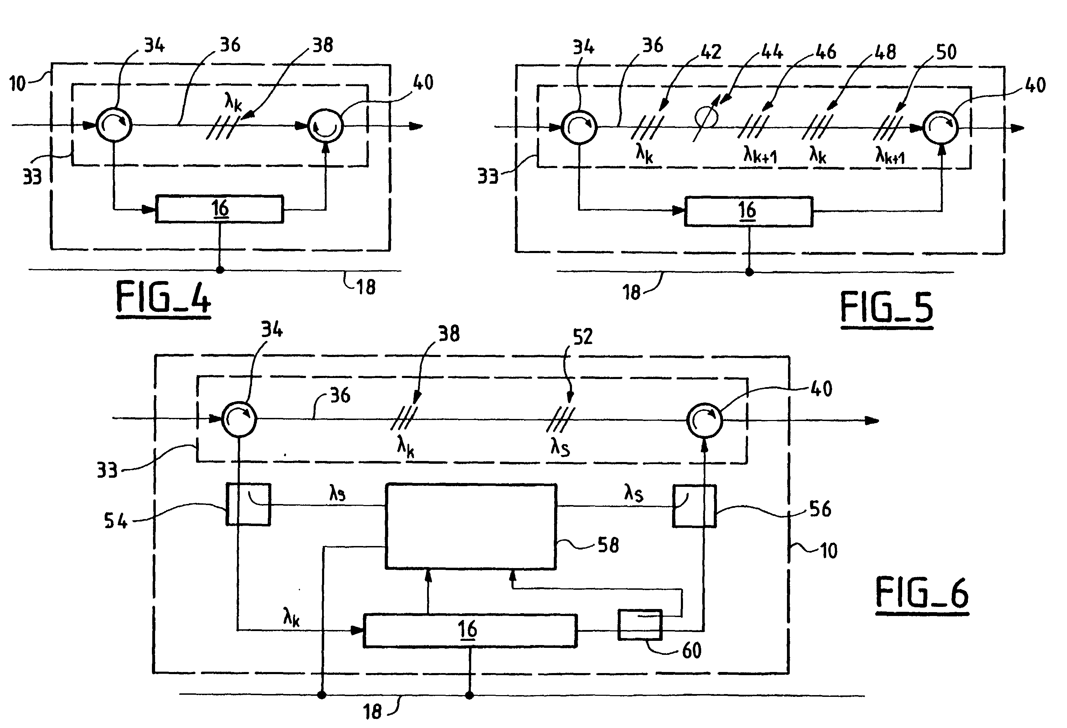

La figure 3 illustre un mode de réalisation similaire à celui de la figure 2, mais adapté à la régénération de deux canaux λₖ et λₖ₊₁. La seule différence avec le régénérateur de la figure 2 consiste à prévoir un moyen de synchronisation 22 en amont du moyen de régénération 16, pour synchroniser les deux canaux à régénérer. Un tel moyen de synchronisation peut être obtenu simplement, comme représenté, à l'aide d'un circulateur optique à trois ports 24 et d'une ligne à retard 26 comportant deux réflecteurs optiques, par exemple des filtres de Bragg 28, 30 espacés l'un de l'autre tel que les canaux sont resynchronisés lorsqu'ils sont reçus dans le moyen de régénération 16. Le retard entre les canaux peut être ajusté à l'aide d'une ligne à retard ajustable 32.

La figure 4 illustre un second mode de réalisation d'un régénérateur conçu pour régénérer un seul canal. II comprend essentiellement un dispositif d'insertion/extraction 33, classique dans le domaine technique des systèmes de transmission optique, et un moyen de régénération 16. Le dispositif d'insertion extraction 33 comprend un premier circulateur optique à trois ports 34, un tronçon de ligne optique 36 pourvue d'un réflecteur optique 38, par exemple un filtre de Bragg, pour réfléchir le canal λₖ, et un second circulateur optique 40. Ces éléments sont agencés, de manière connue, pour extraire le canal λₖ de la ligne optique et le diriger vers l'entrée du moyen de régénération 16, et pour insérer sur la ligne optique le canal λₖ régénéré reçu du moyen de régénération 16.

Il est important de noter que le moyen de régénération optique peut être identique pour tous les canaux, par exemple dans le cas où le régénérateur comprend un modulateur synchrone, de sorte que le régénérateur 10 peut être adapté à un canal quelconque simplement en choisissant la longueur d'onde à réfléchir par le réflecteur optique 38. Ainsi, le système de transmission de la figure 1 peut être équipé de régénérateurs identiques, d'où une fabrication simplifiée, un coût réduit et une fiabilité accrue, qui sont personnalisés uniquement en ce qui concerne la longueur d'onde du réflecteur optique 38.

Le régénérateur selon la figure 4 peut être adapté, comme représenté sur la figure 5, pour régénérer deux canaux λₖ et λₖ₊₁. Ce régénérateur diffère de celui de la figure 4 en ce que le tronçon de ligne 36 disposé entre les circulateurs optiques 34 et 40 comporte deux réflecteurs optiques pour chaque canal. De manière plus pécise, sont disposés successivement sur ce tronçon de ligne : un réflecteur optique 42 pour le canal λₖ, une ligne à retard ajustable 44 et un réflecteur optique 46 pour le canal λₖ₊₁, l'ensemble formant un moyen de resynchronisation similaire au moyen de resynchronisation 22 de la figure 3, un réflecteur optique 48 pour le canal λₖ, et un réflecteur optique 50 pour le canal λₖ₊₁.

Le régénérateur selon la figure 5 peut être modifié pour régénérer plus de deux canaux. On comprend qu'il suffit pour cela d'ajouter, sur le tronçon de ligne 36, des réflecteurs optiques adaptés à réfléchir les canaux que l'on souhaite régénérer, ainsi que, le cas échéant, des lignes à retard tels que 44.

Notons que l'amplificateur de compensation 20 du régénérateur de la figure 2, destiné à compenser une différence d'intensité entre le canal ou les canaux régénérés et les canaux non régénérés, peut être disposés, dans le cas du régénérateur selon la figure 5, entre les réflecteurs optiques 46 et 48.

Outre la simplicité structurelle du système de transmission selon l'invention, un avantage supplémentaire réside dans la possibilité d'implémenter de manière simple une fonction de supervision des éléments du système. On sait que la supervision consiste à transmettre sur la ligne un signal, qui est traité dans chaque amplificateur ou régénérateur, pour inclure dans ce signal des informations relatives à l'état, aux performances, etc ... de ces amplificateurs et régénérateurs. Ce signal de supervision est dans un canal spécifique qui se situe dans la bande passante du multiplex. L'inconvénient avec les systèmes selon l'art antérieur est que tous les canaux sont régénérés simultanément, ce qui implique, dans chaque régénérateur, un moyen de supervision complexe (supervision de l'ensemble des canaux WDM et des modulateurs synchrones associés).

Le système de transmission selon l'invention présente l'avantage de permettre de réaliser la supervision de manière plus simple dans chaque régénérateur.

On a représenté sur la figure 6 un régénérateur, similaire à celui de la figure 4, mais dans lequel a été ajouté un moyen de supervision. Les éléments identiques à ceux de la figure 4 portent les mêmes références numériques.

Dans le régénérateur de la figure 6, les moyens permettant d'assurer la fonction de supervision comprennent : un réflecteur optique 52 pour réaliser l'extraction puis l'insertion du canal de supervision λₛ, un démultiplexeur ou coupleur optique 54 pour séparer les canaux λₖ et λₛ extraits de la ligne par le circulateur 34 et les réflecteurs 38, 52, un multiplexeur ou coupleur optique 56 pour remultiplexer les canaux λₖ et λₛ après qu'ils ont été traités, et une unité de supervision 58 pour recevoir des informations sur l'état du régénérateur 16 et sur l'état du canal λₖ, par l'intermédiaire d'un coupleur optique 60 prélevant une partie du signal dans le canal λₖ à la sortie du moyen de régénération 16, l'unité de supervision 58 transmettant cette information dans le canal λₛ vers le multiplexeur ou coupleur optique 56.

La supervision est plus simple que dans l'art antérieur car elle ne prend en compte qu'un petit nombre de canaux du multiplex à chaque régénérateur (un seul canal dans le cas de la figure 4).

L'invention n'est pas limitée aux modes de réalisations qui ont été décrits, mais s'étend au contraire à toutes les variantes de réalisations qui sont conformes aux revendications qui suivent.

## Revendications

1. Système de transmission sur fibre optique à multiplexage en longueurs d'onde à n canaux, comprenant un émetteur optique (2) et un récepteur optique (4) reliés par une ligne optique (6) comportant au moins une fibre optique, et au moins un ensemble de m (m>1) régénérateurs (10) de canaux, **caractérisé en ce que** p (p≤m) régénérateurs (10) successifs régénèrent respectivement des groupes de canaux G₁, G₂, ... Gₚ, ces groupes formant une partition de l'ensemble des n canaux.

2. Système selon la revendication 1, dans lequel p est un sous-multiple de m.

3. Système selon l'une des revendications 1 ou 2, dans lequel chaque groupe G₁, G₂, ... Gₚ comporte un seul canal.

4. Système selon la revendication 3, dans lequel chaque régénérateur est un moyen de régénération optique (16).

5. Système selon l'une des revendications 1 ou 2, dans lequel au moins un groupe G₁, G₂, ... Gₚ comporte deux canaux.

6. Système selon la revendication 4, dans lequel chaque régénérateur destiné à régénérer une pluralité de canaux comporte un moyen de synchronisation (22) des canaux à régénérer et un moyen de régénération optique (16).

7. Système selon l'une des revendications 4 ou 6, dans lequel chaque moyen de régénération (16) comprend un modulateur synchrone.

8. Système selon l'une quelconque des revendications 1 à 7, dans lequel chaque régénérateur (10) comprend un démultiplexeur (12) et un multiplexeur (14) afin de traiter de manière indépendante les canaux à régénérer d'une part, et les canaux à ne pas régénérer d'autre part.

9. Système selon l'une quelconque des revendications 1 à 4, dans lequel chaque régénérateur (10) comprend un dispositif d'insertion/extraction afin d'isoler les canaux à régénérer.

10. Système selon l'une quelconque des revendications 1 à 9, dans lequel chaque régénérateur comprend un amplificateur de compensation (20) pour compenser des différences d'intensité entre les canaux régénérés et les canaux non régénérés.

11. Système selon l'une des revendications précédentes, comportant un moyen de supervision, ledit moyen de supervision mettant en oeuvre un canal dédicacé λₛ.

12. Système selon la revendication 11, dans lequel chaque régénérateur (10) comprend un moyen (34, 52, 54) pour séparer le canal λₛ des autres canaux, une unité de supervision (58) pour transmettre dans le canal λₛ des d'informations relatives à l'état du régénérateur, et un moyen (56, 40, 52) pour remultiplexer le canal λₛ avec les autres canaux.

13. Système selon la revendication 12, dans lequel chaque régénérateur re comprend un moyen de régénération (16) pour régénérer les canaux d'un groupe de canaux, l'unité de supervision recevant des informations dudit moyen de régénération et recevant une fraction du signal régénéré délivré par ledit moyen de régénération (16).

14. Système selon l'une quelconque des revendications précédentes comprenant une pluralité d'amplificateurs optiques disposés à une distance Zₐ les uns des autres, et des régénérateurs optiques disposés à une distance Zᵣ les uns des autres, où Zᵣ est un multiple de Zₐ.

## Claims

1. An n channel wavelength-division multiplex fibre optic transmission system including an optical transmitter (2) and an optical receiver (4) connected by an optical line (6) including at least one optical fibre and at least one set of m(m>1) channel regenerators (10), **characterized in that** p(p≤m) successive regenerators (10) regenerate respective groups of channels G₁, G₂, ... Gₚ forming a subset of the set of n channels.

2. A system according to claim 1 wherein p is a submultiple of m.

3. A system according to claim 1 or claim 2 wherein each group G₁, G₂, ... Gₚ includes only one channel.

4. A system according to claim 3 wherein each regenerator is an optical regenerator unit (16).

5. A system according to claim 1 or claim 2 wherein at least one group G₁, G₂, ... Gₚ includes two channels.

6. A system according to claim 4 wherein each regenerator for regenerating a plurality of channels includes means 22 for synchronizing the channels to be regenerated and an optical regenerator unit (16).

7. A system according to claim 4 or claim 6 wherein each regenerator unit (16) includes a synchronous modulator.

8. A system according to any of claims 1 to 7 wherein each regenerator (10) includes a demultiplexer (12) and a multiplexer (14) to process independently channels which are to be regenerated and channels which are not to be regenerated.

9. A system according to any of claims 1 to 4 wherein each regenerator (10) includes an inserter/extractor system for isolating channels to be regenerated.

10. A system according to any of claims 1 to 9 wherein each regenerator includes a compensator amplifier (20) for compensating intensity differences between regenerated and non-regenerated channels.

11. A system according to any of the preceding claims further including supervisory means using a dedicated channel λₛ.

12. A system according to claim 11 wherein each regenerator (10) includes means (34, 52, 54) for separating the channel λₛ from the other channels, a supervisory unit (58) for transmitting information relating to the status of the regenerator on the channel λₛ and means (56, 40, 52) for remultiplexing the channel λₛ with the other channels.

13. A system according to claim 12 wherein each regenerator re [sic] includes a regenerator unit (16) for regenerating the channels of a group of channels, the supervisory unit receiving information from said regenerator unit and a portion of the regenerated signal delivered by said regenerator unit (16).

14. A system according to any of the preceding claims including a plurality of optical amplifiers spaced by Zₐ and a plurality of optical regenerators spaced by Zᵣ, wherein Zᵣ is a multiple of Zₐ.

## Patentansprüche

1. n-kanaliges faseroptisches Wellenlängenmultiplex-Übertragungssystem mit einem optischen Sender(2) und einem optischen Empfänger (4), die durch eine optische Leitung (6) mit wenigstens einer optischen Faser verbunden sind, und wenigstens einer Menge von m (m>1) Kanalregeneratoren (10), **dadurch gekennzeichnet, dass** p (p≤m) aufeinanderfolgende Regeneratoren (10) jeweils Gruppen von Kanälen G₁, G₂, ..., Gₚ regenerieren, wobei diese Gruppen eine Abteilung der Menge der n Kanäle bilden.

2. System nach Anspruch 1, bei dem p ein Teiler von m ist.

3. System nach einem der Ansprüche 1 oder 2, **dadurch gekennzeichnet, dass** jede Gruppe G₁, G₂, ..., Gₚ einen einzigen Kanal umfasst.

4. System nach Anspruch 3, bei dem jeder Regenerator ein optisches Regenerationsmittel (16) ist.

5. System nach einem der Ansprüche 1 oder 2, bei dem wenigstens eine Gruppe G₁, G₂, ..., Gₚ zwei Kanäle umfasst.

6. System nach Anspruch 4, bei dem jeder zum Regenerieren einer Mehrzahl von Kanälen vorgesehene Regenerator ein Mittel zum Synchronisieren (22) der zu regenerierenden Kanäle und ein optisches Regenerationsmittel (16) aufweist.

7. System nach einem der Ansprüche 4 oder 6, bei dem jedes Regenerationsmittel (16) einen synchronen Modulator umfasst.

8. System nach einem der Ansprüche 1 bis 7, bei dem jeder Regenerator (10) einen Demultiplexer (12) und einen Multiplexer (14) zum unabhängigen Verarbeiten der zu regenerierenden Kanäle einerseits und der nicht zu regenerierenden Kanäle andererseits umfasst.

9. System nach einem beliebigen der Ansprüche 1 bis 4, bei dem jeder Regenerator (10) eine Einfüge/Extraktionsvorrichtung zum Isolieren der zu regenerierenden Kanäle aufweist.

10. System nach einem beliebigen der Ansprüche 1 bis 9, bei dem jeder Regenerator (10) einen Kompensationsverstärker (20) zum Kompensieren der Intensitätsunterschiede zwischen den regenerierten Kanälen und den nicht regenerierten Kanälen aufweist.

11. System nach einem beliebigen der vorhergehenden Ansprüche, mit einem Überwachungsmittel, wobei das Überwachungsmittel einen dedizierten Kanal λₛ einsetzt.

12. System nach Anspruch 11, bei dem jeder Regenerator (10) ein Mittel (34, 52, 54) zum Trennen des Kanals λₛ von den anderen Kanälen, eine Überwachungseinheit (58) zum Übertragen von den Zustand des Regenerators betreffenden Informationen auf dem Kanal λₛ und ein Mittel (56, 40, 52) zum Remultiplexen des Kanals λₛ mit den anderen Kanälen umfasst.

13. System nach Anspruch 12, bei dem jeder Regenerator (10) ein Regenerationsmittel (16) zum Regenerieren der Kanäle einer Gruppe von Kanälen umfasst und die Überwachungseinheit Informationen von dem Regenerationsmittel empfängt und einen Bruchteil des von dem Regenerationsmittel (16) abgegebenen regenerierten Signals empfängt.

14. System nach einem beliebigen der vorhergehenden Ansprüche, mit einer Mehrzahl von in einem Abstand Zₐ voneinander angeordneten optischen Verstärkern und in einem Abstand Zᵣ voneinander angeordneten optischen Regeneratoren, wobei Zᵣ ein Vielfaches von Zₐ ist.
